Europäisches Patentamt

European Patent Office

Office européen des brevets

(11) Veröffentlichungsnummer: **0 471 242 A2**

## EUROPÄISCHE PATENTANMELDUNG

(21) Anmeldenummer: **91112910.4**

(22) Anmeldetag: **31.07.91**

(51) Int. Cl.5: **H01G 9/02**

(30) Priorität: **13.08.90 DE 4025617**

(43) Veröffentlichungstag der Anmeldung:
**19.02.92 Patentblatt 92/08**

(84) Benannte Vertragsstaaten:
**DE ES FR GB IT SE**

(71) Anmelder: **SIEMENS AKTIENGESELLSCHAFT**
**Wittelsbacherplatz 2**
**W-8000 München 2(DE)**

(72) Erfinder: **Waidhas, Manfred, Dr.**
**Schnieglinger Strasse 285**
**W-8500 Nürnberg 90(DE)**
Erfinder: **Pantel, Kurt**
**Hauptstrasse 21**
**W-8501 Heroldsberg(DE)**
Erfinder: **Richter, Gerhard, Dr.**
**An der Lauseiche 30**
**W-8520 Erlangen(DE)**

(54) **Festelektrolytkondensator.**

(57) Festelektrolytkondensatoren werden in der Weise hergestellt, daß ein durchgehende Poren aufweisender formierter metallischer Anodenkörper an einer Arbeitselektrode angeordnet und in den Poren des Anodenkörpers durch elektrochemische Polymerisation eines Monomeren in flüssiger Phase in Gegenwart eines Leitsalzes ein leitfähiges Polymeres abgeschieden wird, und daß das Polymere mit einer Kontaktierung versehen wird.

EP 0 471 242 A2

Die Erfindung betrifft ein Verfahren zur Herstellung eines Festelektrolytkondensators.

Elektrolytkondensatoren, wie Aluminium- und Tantalkondensatoren, mit flüssigem Elektrolyt sind bereits vor einiger Zeit durch solche mit Festelektrolyt ersetzt worden. Insbesondere bei Tantalkondensatoren dient dabei Mangandioxid als Festelektrolyt. Dazu wird Mangannitrat in einem aufwendigen mehrstufigen Prozeß in die poröse Oberfläche der Metallanode eingebracht und pyrolysiert. Neben dem technologischen Aufwand ist dabei von Nachteil, daß beim Pyrolyse- bzw. Sinterprozeß aggressives Stickstoffdioxid (NO$_2$) freigesetzt wird, das zu einer Schädigung des als Dielektrikum dienenden Metalloxids führen kann. Dem wird in der Weise entgegengewirkt, daß die Oxidschicht, die durch Formierung entsteht, dicker als nötig ausgebildet wird. Dadurch müssen dann aber Kapazitätseinbußen in Kauf genommen werden.

Es sind auch bereits Elektrolytkondensatoren bekannt, die als Festelektrolyt elektrisch leitfähige organische Komplexsalze auf der Basis von 7.7.8.8-Tetracyano-1.4-chinodimethan (TCNQ) enthalten (siehe beispielsweise DE-OS 32 14 355 bzw. US-PS 4 580 855). Nachteilig an diesen TCNQ-Komplexen, die in geschmolzenem Zustand auf die formierte, d.h. oxidierte Metalloberfläche aufgebracht werden, ist aber, daß sie erst bei Temperaturen verarbeitbar (schmelzbar) sind, bei denen bereits ihre Stabilitätsgrenze erreicht wird, und daß sie im Laufe der Zeit - insbesondere bei Überhitzung - Blausäure abspalten und deshalb toxisch und korrosiv wirken (siehe EP-OS 0 340 512).

Es ist ferner bereits bekannt, in Elektrolytkondensatoren leitfähige Polymere als Festelektrolyt einzusetzen (siehe beispielsweise EP-OS 0 135 223, 0 264 786 und 0 340 512). Derartige Festelektrolytkondensatoren haben gegenüber konventionellen Kondensatoren mit flüssigem Elektrolyt den Vorteil, daß der Elektrolyt nicht auslaufen oder verdampfen kann; darüber hinaus ist die Verlustleistung bzw. der ESR ("electrolytic serial resistance") geringer. Im Vergleich zu anderen Festelektrolytkondensatoren ist - neben Vorteilen in technologischer Hinsicht - ein besseres Frequenzverhalten und eine bessere Kapazitätsausnutzung zu erwarten.

Das wesentliche Problem bei der Realisierung eines Elektrolytkondensatores mit einem leitfähigen Polymeren als Festelektrolyt ist die effiziente Einbringung des Polymeren in die Anode, die im allgemeinen eine hochporöse Oberflächenstruktur aufweist. Zur Erzielung hoher Volumenkapazitäten werden bei Elektrolytkondensatoren nämlich geätzte Folien bzw. aus extrem feinem Pulver hergestellte Sinterkörper eingesetzt.

Leitfähige Polymere werden üblicherweise durch eine elektrochemische Polymerisation (entsprechender Monomerer) hergestellt, d.h. auf einem Substrat abgeschieden. Da die Abscheidung ein elektronenleitendes Substrat voraussetzt, ist diese Vorgehensweise aber nicht ohne weiteres auf die Herstellung von Festelektrolyten für Elektrolytkondensatoren übertragbar. Die formierten Metallanoden von Elektrolytkondensatoren weisen nämlich dielektrische Eigenschaften auf.

Es sind bereits Verfahren bekannt, bei denen zunächst eine elektrochemische Polymerisation auf einem Aluminiumsubstrat erfolgt und erst dann die dielektrische Sperrschicht durch Anlegen einer externen Spannung erzeugt wird (siehe dazu: EP-OS 0 283 239 und 0 285 728). Hierbei ist jedoch von Nachteil, daß durch den nachträglichen Formierungsprozeß die Polymereigenschaften negativ beeinflußt werden; außerdem wird durch das Polymere die homogene Ausbildung des Dielektrikums gestört.

Bei anderen bekannten Verfahren wird die angesprochene Problematik dadurch umgangen, daß chemische Polymerisationsverfahren zum Einsatz gelangen. Dabei wird insbesondere folgendermaßen vorgegangen:

- Nach der EP-OS 0 340 512, aus der die Verwendung von Polythiophenen bestimmter Struktur als Festelektrolyt in Elektrolytkondensatoren bekannt ist, werden auf einseitig mit einer Oxidschicht bedeckten Metallfolien, die als Anoden verwendet werden, die Polythiophene erzeugt, indem auf die mit der Oxidschicht bedeckte Seite der Metallfolien monomere Thiophene und Oxidationsmittel, vorzugsweise in Form von Lösungen, entweder getrennt nacheinander oder vorzugsweise zusammen aufgebracht werden; die oxidative Polymerisation wird gegebenenfalls durch ein Erwärmen der Beschichtung zu Ende geführt. Bei getrennter Aufbringung von Thiophen-Monomer und Oxidationsmittel werden die Metallfolien vorzugsweise zunächst mit einer Lösung des Oxidationsmittels und anschließend mit der Thiophenlösung beschichtet. Die Lösungsmittel werden nach dem Aufbringen der Lösungen durch Abdampfen bei Raumtemperatur entfernt.

- Die Beschichtung der Anoden kann auch mittels Gasphasenpolymerisation erfolgen (siehe dazu: JP-OS 63-314823 bzw. "Chemical Abstracts", Vol. 111 (1989), No. 16, 145285s, und JP-OS 01-012514 bzw. "Chemical Abstracts", Vol. 110 (1989), No. 26, 241310w). Dazu wird eine formierte Aluminiumanode beispielsse zunächst mit einer Lösung eines Oxidationsmittels behandelt und dann einem Monomeren, wie Pyrrol, ausgesetzt.

- Ein Polypyrrol-Festelektrolyt kann auch in der Weise hergestellt werden (siehe dazu: JP-OS 01-049211 bzw. "Chemical Abstracts", Vol. 111 (1989), No. 6, 49055w), daß die Anode zunächst mit einer Lösung des Monomeren imprägniert und dann mit einer Lösung eines Oxidationsmittels behandelt wird.

Die Verfahren der vorstehend genannten Art, bei denen eine Polymerisation auf chemischem Weg erfolgt, weisen eine Reihe von Nachteilen auf. Wesentlich sind dabei insbesondere folgende Punkte:

1. Die reduzierte Form des Oxidationsmittels verbleibt in der Polymerschicht. Dadurch wird deren Leitfähigkeit herabgesetzt, und darüber hinaus kann die Stabilität des Polymeren negativ beeinflußt und das Dielektrikum geschädigt werden.

2. Bedingt durch den Volumenschwund beim Verdampfen von Lösungsmittel bzw. aufgrund der Tatsache, daß tiefe feine Poren nicht erreicht werden, ist die Füllung der Poren nicht effizient.

3. Die erforderlichen Lösungen sind im allgemeinen nur für eine sehr beschränkte Zeitspanne, d.h. für ca. 1 bis 2 h, verarbeitbar (siehe dazu insbesondere EP-OS 0 340 512).

Aufgabe der Erfindung ist es, ein Verfahren zur Herstellung von Festelektrolytkondensatoren anzugeben, bei dem leitfähige Polymere in effizienter Weise in die Porenstruktur von Substraten eingebracht werden können, die in den Kondensatoren als Anoden dienen.

Dies wird erfindungsgemäß dadurch erreicht, daß ein durchgehende Poren aufweisender formierter metallischer Anodenkörper an einer Arbeitselektrode angeordnet und in den Poren des Anodenkörpers durch elektrochemische Polymerisation eines Monomeren in flüssiger Phase in Gegenwart eines Leitsalzes ein leitfähiges Polymeres abgeschieden wird, und daß das Polymere mit einer Kontaktierung versehen wird.

Mit dem Begriff Leitsalz werden im Rahmen der vorliegenden Patentanmeldung chemische Verbindungen bezeichnet, die zwei Funktionen zu erfüllen haben. Zum einen müssen sie der flüssigen Phase, d.h. dem Elektrolyten, elektrische Leitfähigkeit verleihen, zum anderen dient - im Regelfall - das Anion dieser Verbindungen zur Dotierung des Polymeren. Als "Leitsalz" können deshalb auch (freie) Säuren fungieren, beispielsweise Phosphorsäure.

Beim erfindungsgemäßen Verfahren ist es wesentlich, daß das leitfähige Polymere elektrochemisch abgeschieden wird. Deshalb entfallen die vorstehend unter Punkt 1 und 3 angeführten Nachteile a priori. Bei diesem Verfahren wird darüber hinaus eine weitestgehende Füllung der Porenstruktur erreicht (siehe dazu Punkt 2), und zwar deshalb, weil von Substraten, d.h. Anodenkörpern, mit durchgehenden Poren ausgegangen wird. Diese Anodenkörper werden quasi als Maske vor einer Arbeitselektrode angeordnet, so daß beim Abscheidungsprozeß ausschließlich ein Wachstum des Polymeren in den Poren erfolgt. Das Polymere wächst nämlich, ausgehend von der Arbeitselektrode, durch die Poren des Anodenkörpers hindurch; die Abscheidung wird beendet, wenn die von der Arbeitselektrode abgewandte Oberfläche des Anodenkörpers mit einer dünnen Polymerschicht bedeckt ist. Auf diese Weise wird die gesamte Oberfläche des Dielektrikums ausgenutzt, so daß Kondensatoren mit einer hohen Kapazität erhalten werden.

Es ist zwar bereits bekannt, leitfähige Polymere in den Poren sogenannter Host-Membranen zu erzeugen (siehe dazu: "J. Electrochem. Soc.", Vol. 133 (1986), Seiten 310 bis 315 sowie Seiten 2206 und 2207); dies dient jedoch im wesentlichen zur Herstellung von Polymeren mit faserförmiger mikroporöser Struktur. Dazu werden beispielsweise ca. 50 $\mu$m dicke $Al_2O_3$-Membranen verwendet, die lineare zylindrische Poren mit einem Durchmesser von 0,2 $\mu$m aufweisen (siehe dazu: "Synth. Met.", Vol. 36 (1990), Seiten 275 bis 281). Um in den Poren elektrochemisch Polypyrrol abscheiden zu können, muß eine Oberfläche der Membran als Elektrode ausgestaltet werden. Dazu wird auf diese Oberfläche zunächst ein dünner Goldfilm aufgesputtert (Dicke: ca. 50 nm) und mittels eines Kupferdrahtes kontaktiert; dann wird auf diesen Film durch galvanostatische Elektroplattierung, d.h. galvanisch, eine dicke Goldschicht aufgebracht und mit Epoxidharz abgedeckt. Nachdem das Polypyrrol in den Poren abgeschieden ist, wird die Host-Membran aufgelöst (mittels NaOH), wobei isolierte Polypyrrolfasern verbleiben, d.h. Fasern, die von leeren Räumen, welche die Mikroporen darstellen, umgeben sind.

Im Gegensatz dazu wird beim erfindungsgemäßen Verfahren eine Elektroden/Elektrolyt-Einheit für Festelektrolytkondensatoren hergestellt. Bei diesem Verfahren ist es außerdem nicht erforderlich, eine Oberfläche des Substrats, d.h. des Anodenkörpers, in aufwendiger Weise als Elektrode auszugestalten; vielmehr wird der Anodenkörper lediglich vor eine Arbeitselektrode angebracht. Dennoch werden hierbei die formierten Anodenkörper, trotz ihrer elektrisch isolierenden Oxidschicht, effizient mit dem leitenden Polymeren versehen. Unter Umständen kann es allerdings zweckmäßig sein, die der Arbeitselektrode zugewandte Oberfläche des Anodenkörpers mit einer Kontaktierungshilfe zu versehen, was sehr einfach in der Weise geschehen kann, daß diese Oberfläche beispielsweise mit Graphit oder Leitsilber bestrichen wird. Dadurch wird nämlich ein besonders gleichmäßiges Wachstum des Polymeren gewährleistet.

Beim erfindungsgemäßen Verfahren erfolgt die Abscheidung des Polymeren auf der formierten Oberfläche des Anodenkörpers, d.h. auf dem Dielektrikum, in einer üblichen elektrochemischen Zelle bzw. Elektrolyseapparatur. Dazu ist eine Arbeitselektrode sowie eine Gegen- und eine Bezugselektrode erforderlich; ferner wird ein Potentiostat oder eine andere externe Stromquelle benötigt. Die Arbeitselektrode muß anodisch, was der Regelfall ist, oder kathodisch polarisiert sein. Sie besteht dazu aus elektronenleitendem Material, wie Gold, Nickel, Titan, Edelstahl und Kohlenstoff; vorzugsweise wird eine Arbeitselektrode aus Platin oder Graphit verwendet. Dabei können beispielsweise auch vergoldete oder platinierte Elektroden zum Einsatz gelangen.

Der Anodenkörper wird auf die Arbeitselektrode gelegt und an den Randzonen leicht angepreßt; als Anodenkörper dient vorzugsweise eine formierte Metallfolie oder ein formierter metallischer Sinterkörper. Bei der Verwendung von Metallfolien kann die Abscheidung des Polymeren auch in der Weise erfolgen, daß die Folie über eine als Anode geschaltete Walze geführt wird, die teilweise im Elektrolyten angeordnet ist.

Das Material für den Anodenkörper ist vorteilhaft ein sogenanntes Ventilmetall, worunter insbesondere Aluminium, Titan, Zirkonium, Niob, Hafnium, Tantal und Wolfram verstanden werden sollen; vorzugsweise wird Aluminium oder Tantal verwendet. Beispielhaft seien hierzu Aluminiumfolien, vorzugsweise mit einer Dicke von 50 bis 300 $\mu m$, und Sinterkörper auf der Basis von Tantal genannt. Die metallischen Anodenkörper, die durchgehende Poren aufweisen (Porendurchmesser: ca. 0,2 bis 5 $\mu m$), sind formiert, d.h. sämtliche Oberflächen und auch die Porenwandungen sind oxidbehaftet und somit nichtleitend.

Die elektrochemische Abscheidung des Polymeren, die normalerweise - aufgrund der anodisch sperrenden Eigenschaften der Folie bzw. des Sinterkörpers - nicht möglich ist, erfolgt beim erfindungsgemäßen Verfahren offenbar deshalb, weil Substrate mit durchgehenden Poren verwendet werden. Die Anodenkörper fungieren bei diesem Verfahren lediglich als eine Art Maske, so daß ein ausschließliches Wachstum des Polymeren in den Poren erzwungen wird. Dementsprechend sind andere Bereiche der Arbeitselektrode, die dem Elektrolyten zugänglich sind, abzublenden.

Beim erfindungsgemäßen Verfahren erfolgt die Polymerisation des Monomeren in flüssiger Phase. Dazu kann ein flüssiges Monomeres in Substanz verwendet werden, dem Leitsalz zugesetzt ist. Vorzugsweise dient zur Polymerisation jedoch eine Monomerenlösung. Diese Lösung enthält dann auch das Leitsalz, d.h. der Elektrolyt ist in diesem Fall eine Lösung des Leitsalzes, der das Monomere zugesetzt wird. Das Lösungsmittel selbst kann protisch oder aprotisch sein. Vorzugsweise wird dabei ein organisches Lösungsmittel verwendet, wie Acetonitril, Nitromethan, Dimethylformamid, Dimethylsulfoxid, Dichlormethan, Propylencarbonat und Aceton. Bei mit Wasser mischbaren organischen Lösungsmitteln kann diesen - zur Erhöhung der Leitfähigkeit - eine geringe Menge Wasser zugesetzt werden, im allgemeinen bis zu 3 Gew.-%. Unter Umständen kann aber auch Wasser oder eine verdünnte Säure als Lösungsmittel dienen.

Die Konzentration des Monomeren in der Lösung beträgt im allgemeinen 0,001 bis 2 mol/l, vorzugsweise 0,01 bis 0,2 mol/l. Als Monomere werden gängige Verbindungen eingesetzt, die sich elektrochemisch polymerisieren lassen; dies sind insbesondere Verbindungen aus der Gruppe der 5-Ring-Heterocyclen. Vorzugsweise dienen als Monomeres Pyrrol und Thiophen, und zwar in unsubstituierter Form oder in substituierter Form, d.h. entsprechende Derivate. Wegen der besonderen Stabilität werden dabei solche Derivate bevorzugt, die in 3- oder 4-Stellung Alkyl- oder Alkyloxygruppen tragen. Daneben kommen ferner insbesondere auch Anilin und Derivate davon in Betracht.

Die elektrochemische Polymerisation des Monomeren erfolgt in Gegenwart eines Leitsalzes. Die dabei eingesetzten Leitsalze sind vorzugsweise Alkali-, Erdalkali- und Ammoniumsalze organischer oder anorganischer Säuren; daneben kommen auch Phosphoniumsalze in Betracht. Die Säuren, d.h. die Anionen, sind dabei in einem weiten Bereich frei wählbar. So können als Anion beispielsweise Perchlorat, Sulfat und Toluolsulfonat dienen; bevorzugt wird Phosphat eingesetzt, was auch in Form der (freien) Säure der Fall sein kann. Es können ferner auch Komplexanionen, wie Tetrafluoroborat oder Hexafluorophosphat, und polymere Anionen, wie Polyvinylsulfonat, eingesetzt werden. Allgemein sollten die Anionen so gewählt werden, daß sie das Dielektrikum nicht durchdringen können und deshalb die Selbstentladung des Kondensators nicht verstärken; große und höherwertige Anionen sind deshalb besonders geeignet. Die Leitsalzkonzentration beträgt im allgemeinen 0,001 bis 1 mol/l, vorzugsweise 0,01 bis 0,1 mol/l.

Die Abscheidung des Polymeren erfolgt bei konstanter Spannung, potentiostatisch, galvanostatisch oder potentiodynamisch. Der Potentialbereich bzw. die Stromdichte kann dabei in einem weiten Bereich variiert werden, wobei aber ein für das jeweilige Monomere charakteristisches Potential überschritten werden muß. Die Stromdichte beträgt - je nach der Monomerkonzentration - im allgemeinen zwischen 0,01 und 1000 mA/cm². Vorteilhaft beträgt die Stromdichte bei der Abscheidung des Polymeren zwischen 0,1 und 50 mA/cm², vorzugsweise liegt der Arbeitsbereich zwischen 0,5 und 20

mA/cm$^2$. Die elektrochemische Polymerisation wird im allgemeinen bei Raumtemperatur und unter Inertgas durchgeführt. Insbesondere zur Erzielung besonderer Polymereigenschaften kann die Temperatur jedoch in einem weiten Bereich variiert werden.

Das Ende des Abscheidungsprozesses ist erreicht, wenn das Polymere zunächst an vereinzelten Poren des Anodenkörpers durchwächst und dann die dem Elektrolyten zugewandte, d.h. die der Arbeitselektrode abgewandte Oberfläche des Anodenkörpers flächenhaft abdeckt. Die Bestimmung des Endpunktes der Abscheidung kann im übrigen auch coulometrisch oder durch den Einsatz anderer physikalischer Meßtechniken erfolgen. Nach beendeter Abscheidung wird der Anodenkörper von der Arbeitselektrode abgenommen und aus der Abscheidungsvorrichtung entfernt. Nach dem Verdampfen des Monomeren bzw. des Lösungsmittels wird das Polymere endkontaktiert, d.h. elektrisch mit Kathodenkontaktmitteln verbunden.

Soweit erforderlich, kann bei den Kondensatoren nach der Erfindung eine Nachformierung erfolgen, d.h. ein Ausheilen eventuell entstandener Defekte im Dielektrikum. Dies kann durch Anlegen einer externen Spannung, welche die Nennspannung um 10 bis 100 % übersteigt, an den fertigen Kondensator geschehen, eventuell in definierter Feuchtigkeit und auch bei Temperaturen bis 100 °C; hierbei erfolgt ein exponentielles Abklingen des Stromes. Dieser Prozeß wird dann beendet, wenn der fließende Strom die für den Reststrom tolerierbaren Werte unterschreitet. Alternativ dazu kann eine Nachformierung auch in der Weise erfolgen, daß der mit dem Polymeren versehene Anodenkörper in einem zur Formierung üblichen Elektrolyten gegen eine konventionelle Gegenelektrode anodisch belastet wird; die Spannung beträgt hierbei zweckmäßigerweise 50 bis 100 % der anodenspezifischen Formierspannung.

Anhand von Ausführungsbeispielen soll die Erfindung noch näher erläutert werden.

Beispiel 1

Eine 0,1 molare Lösung von 3-Methylthiophen in Acetonitril wird in eine elektrochemische Zelle gegeben; als Leitsalz dient LiClO$_4$, ebenfalls in 0,1 molarer Konzentration. Auf der Arbeitselektrode, die aus Platin besteht, wird eine formierte Anodenfolie aus Aluminium mit durchgehenden Poren (Porendurchmesser: ca. 1 µm) in geeigneter Weise fixiert; die freien Stellen der Arbeitselektrode werden mit einer Blende abgedeckt. Die Abscheidung des Polymeren erfolgt potentiostatisch bei einem Potential von 1800 mV, gemessen gegen eine Kalomel-Bezugselektrode. Der Abscheidungsvorgang wird beendet, wenn das Polymere die Aluminiumfolie flächenhaft überzieht. Die Folie wird dann aus der Zelle entnommen und - nach Verdampfen des Lösungsmittels - anhand bekannter Techniken endkontaktiert. Ein in der vorstehend beschriebenen Weise hergestellter, mit Leitsilber endkontaktierter Kondensator besitzt mit 0,5 bis 0,6 µF/cm$^2$ eine Kapazität von ca. 90 bis 100 % der ursprünglichen Naßkapazität von 0,52 bis 0,57 µF/cm$^2$, jeweils gemessen bei 120 Hz. Damit wird ein Bedeckungsgrad (Füllungsgrad) erzielt, der den erreichbaren Stand der Technik darstellt. Die bekannten Nachteile einer chemischen Abscheidung des Polymeren treten hierbei jedoch nicht auf. Aufgrund der höheren Leitfähigkeit des Elektrolyten (ca. 10 bis 100 S/cm), verglichen mit MnO$_2$ (ca. 1 S/cm) oder flüssigen Elektrolyten (ca. 0,05 S/cm), wird jedoch ein geringerer ESR und ein besseres Hochfrequenzverhalten erzielt: Der Verlustfaktor tan δ bei 10$^4$ Hz beträgt ≤ 0,4; bei bekannten Aluminium- und Tantalkondensatoren liegt dieser Wert bei 0,5 bzw. 0,4.

Beispiel 2

Bei einer Vorgehensweise entsprechend Beispiel 1 wird die der Arbeitselektrode zugewandte Fläche der Anodenfolie mit einer Kontaktierungshilfe, wie Graphit oder Leitsilber, bestrichen. Auf diese Weise wird gewährleistet, daß ein besonders gleichmäßiges Wachstum des Polymeren erfolgt.

Beispiel 3

Kondensatoren mit entsprechenden Eigenschaften wie die nach Beispiel 1 oder 2 hergestellten Kondensatoren werden auch dann erhalten, wenn anstelle einer formierten Aluminiumfolie ein formierter Tantal-Sinterkörper als Anodenkörper verwendet wird.

Beispiel 4

Kondensatoren mit entsprechenden Eigenschaften wie die nach Beispiel 1 oder 2 hergestellten Kondensatoren werden auch dann erhalten, wenn die Polymerisation galvanostatisch mit einer Stromdichte von 5 mA/cm$^2$ durchgeführt wird.

Beispiel 5

Kondensatoren mit entsprechenden Eigenschaften wie die nach Beispiel 1 oder 2 hergestellten Kondensatoren werden auch dann erhalten, wenn mit einer Monomerkonzentration von 2 mol/l gearbeitet wird.

Beispiel 6

Kondensatoren mit entsprechenden Eigenschaften wie die nach Beispiel 1 hergestellten Kondensatoren werden auch dann erhalten, wenn als Elektrolyt eine 0,1 molare Lösung von Pyrrol in Acetonitril dient und als Leitsalz Tetrabutylammoniumtoluolsulfonat (0,1 mol/l) eingesetzt wird. Die Abscheidung erfolgt hierbei galvanostatisch mit 2 mA/cm$^2$.

Beispiel 7

Kondensatoren mit entsprechenden Eigenschaften wie die nach Beispiel 6 hergestellten Kondensatoren werden auch dann erhalten, wenn lösungsmittelfrei gearbeitet wird. Dem reinen Monomeren werden dabei 0,25 mol/l Tetraethylammoniumtoluolsulfonat als Leitsalz zugesetzt.

Beispiel 8

Kondensatoren mit entsprechenden Eigenschaften wie die nach den Beispielen 1 bis 7 hergestellten Kondensatoren werden auch dann erhalten, wenn als Arbeitselektrode eine Graphitscheibe dient. Der Ersatz des Platins durch den Graphit äußert sich nicht negativ in der Effizienz des Abscheidungsverfahrens.

Beispiel 9

Bei einer Vorgehensweise entsprechend den Beispielen 1 bis 4 wird als Monomeres Anilin eingesetzt; als Elektrolyt dient 1 molare Phosphorsäure.

Ein auf diese Weise hergestellter Kondensator weist einen Verlustfaktor tan δ (bei 10$^4$ Hz) von ≤ 0,15 auf. Im Vergleich zu einem Kondensator entsprechend Beispiel 1 oder 2 treten hierbei - beim Anlegen einer externen Spannung (10 V) - geringere Restströme auf: ca. 50 nA/μF. Im Gegensatz dazu beträgt der Reststrom bei bekannten Aluminiumkondensatoren ca. 200 nA/μF (bei einer Spannung von 10 V).

**Patentansprüche**

1. Verfahren zur Herstellung eines Festelektrolytkondensators, **dadurch gekennzeichnet**, daß ein durchgehende Poren aufweisender formierter metallischer Anodenkörper an einer Arbeitselektrode angeordnet und in den Poren des Anodenkörpers durch elektrochemische Polymerisation eines Monomeren in flüssiger Phase in Gegenwart eines Leitsalzes ein leitfähiges Polymeres abgeschieden wird, und daß das Polymere mit einer Kontaktierung versehen wird.

2. Verfahren nach Anspruch 1, **dadurch gekennzeichnet**, daß als Anodenkörper eine durchgehende Poren aufweisende formierte Metallfolie oder ein entsprechender metallischer Sinterkörper verwendet wird.

3. Verfahren nach Anspruch 1 oder 2, **dadurch gekennzeichnet**, daß ein Anodenkörper aus einem Ventilmetall eingesetzt wird, insbesondere aus Aluminium oder Tantal.

4. Verfahren nach einem der Ansprüche 1 bis 3, **dadurch gekennzeichnet**, daß zur Polymerisation eine Monomerenlösung eingesetzt wird, in der das Leitsalz gelöst ist.

5. Verfahren nach Anspruch 4, **dadurch gekennzeichnet**, daß die Konzentration des Monomeren in der Lösung 0,001 bis 2 mol/l beträgt, vorzugsweise 0,01 bis 0,2 mol/l.

6. Verfahren nach Anspruch 4 oder 5, **dadurch gekennzeichnet**, daß die Konzentration des Leitsalzes in der Monomerenlösung 0,001 bis 1 mol/l beträgt, vorzugsweise 0,01 bis 0,1 mol/l.

7. Verfahren nach einem oder mehreren der Ansprüche 1 bis 6, **dadurch gekennzeichnet**, daß die Stromdichte bei der Abscheidung des Polymeren zwischen 0,1 und 50 mA/cm$^2$ beträgt, vorzugsweise zwischen 0,5 und 20 mA/cm$^2$.

8. Verfahren nach einem oder mehreren der Ansprüche 1 bis 7, **dadurch gekennzeichnet**, daß als Monomeres Pyrrol, Thiophen oder Anilin bzw. ein entsprechendes Derivat verwendet wird.

9. Verfahren nach einem oder mehreren der Ansprüche 1 bis 8, **dadurch gekennzeichnet**, daß als Leitsalz ein Alkali-, Erdalkali- oder Ammoniumsalz einer organischen oder anorganischen Säure, insbesondere Phosphorsäure, oder die entsprechende freie Säure eingesetzt wird.

10. Verfahren nach einem oder mehreren der Ansprüche 1 bis 9, **dadurch gekennzeichnet**, daß eine Arbeitselektrode aus Platin oder Graphit verwendet wird.